# EUROPÄISCHE PATENTSCHRIFT

(11) **EP 1 315 924 B1**
(45) Veröffentlichungstag und Bekanntmachung des Hinweises auf die Patenterteilung: **01.12.2004**
(21) Anmeldenummer: 01955244.7
(22) Anmeldetag: 11.07.2001
(51) Int. Cl.: F16J 9/20

(54) **KOLBENRING FÜR KOLBEN-MASCHINEN**
PISTON RING FOR PISTON ENGINES
SEGMENT DE PISTON POUR MACHINES A PISTONS

(30) Priorität: 07.09.2000 DE 10044241
(43) Veröffentlichungstag der Anmeldung: 04.06.2003
(73) Patentinhaber: Mahle GmbH, 70376 Stuttgart (DE)
(72) Erfinder: BRUNKE, Hans-Ulrich, 74360 Ilsfeld-Helfenberg (DE)
(74) Vertreter: Pohle, Reinhard
(86) Internationale Anmeldenummer: PCT/DE2001/002644
(87) Internationale Veröffentlichungsnummer: WO 2002/021025

(56) Entgegenhaltungen:
- DE-C- 381 535
- US-A- 1 393 542
- US-A- 1 613 410
- US-A- 1 658 440

## Beschreibung

Die Erfindung betrifft einen geschlitzten Kolbenring für Kolben für Verbrennungsmotoren oder Kompressoren mit den Merkmalen nach dem Oberbegriff des Anspruchs 1.

Ein derartiger Kolbenring ist aus der CH-PS 171 815 bekannt. Bei dem dort gezeigten Kolbenring ist auf der dem Verbrennungsraum abgekehrten Seite auf der äußeren Umfangsfläche (Lauffläche) eine nutartige Aussparung vorgesehen, die bis nahe an die Schlitzstelle umläuft, um einen Rechteckringstoß zu erreichen. Eine solche Aussparung für einen sogenannten Nasenring wird durch Fräsen hergestellt. Ein solcher Kolbenring befriedigt nicht ohne weiteres hinsichtlich Schmiermittelverbrauch und Leckgasdurchlaß.

Problem der vorliegenden Erfindung ist es daher, einen Kolbenring zu finden, der bei ausreichenden Schmierverhältnissen einen niedrigen Ölverbrauch und einen geringen Leckgasdurchlaß gewährleistet und günstig herzustellen ist.

Die Lösung dieses Problems erfolgt mit einem Kolbenring mit den Merkmalen nach dem Kennzeichen des Anspruchs 1.

Vorteilhafte Ausgestaltungen nach der Erfindung sind in den Unteransprüchen enthalten.

Die Erfindung wird nachfolgend anhand in den Zeichnungen dargestellter Ausführungsbeispiele näher erläutert.

Es zeigt
- Fig. 1: eine Ansicht auf den Schlitz eines Kolbenringes nach dem bekannten Stand der Technik
- Fig. 2: eine Ansicht auf den Schlitz eines Kolbenringes nach der Erfindung
- Fig. 3: in Seitenansicht einen erfindungsgemäßen Kolbenring mit nasenförmiger Aussparung im Schnitt
- Fig. 4: in Seitenansicht einen erfindungsgemäßen Kolbenring mit rechteckiger Aussparung im Schnitt.

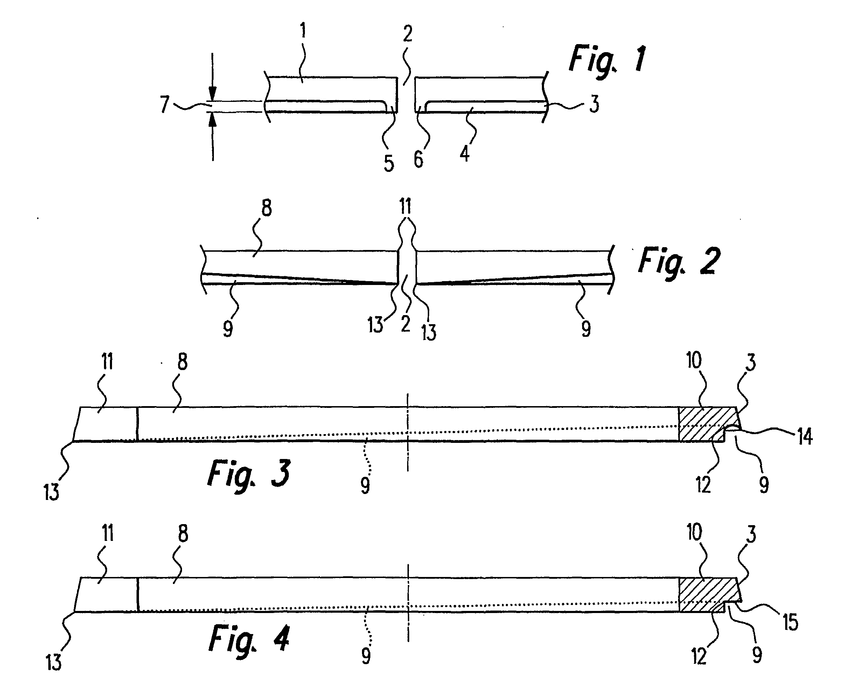

Ein gleichzeitig als Verdichtungs- und Ölabstreifring wirkender Kolbenring 1 mit Schlitz 2 hat auf seiner äußeren 3, dem Verbrennungsraum abgekehrten Seite eine Aussparung 4, die gemäß Fig. 1 beim bekannten Stand der Technik bis an die Kolbenringenden 5, 6 nahe des Schlitzes 2 mit gleichmäßiger Höhe 7 nutartig umläuft.

Bei einem als Nasenminutenring ausgebildeten Kolbenring 8 gemäß der Erfindung nach den Fig. 2 - 4 verläuft eine entsprechende Aussparung 9 ausgehend von einem Bereich 10 diametral gegenüber des Schlitzes 2 bzw. der Stoßseite 11 mit maximaler Höhe 12 bis zum Schlitz 2 bzw. Stoßseite 11 allmählich bis auf Null 13 abnehmend. Der Verlauf der Höhe der Aussparung 9 ist punktiert in der Zeichnung angedeutet.

Die Herstellung einer derartigen Aussparung 9 am aufgezeigten Kolbenring 8 erfolgt durch einen einfachen Drehvorgang, bei dem der Kolbenring 8 schräg in seiner Aufnahme eingespannt ist, sodaß der entsprechende Einstich gegenüber der Stoßseite 11 des Kolbenringes 8 wie üblich ausgebildet ist, jedoch diametral gegenüber auf Stoßseite 11 flach ausläuft.

Die Ausführung des Kolbenringes der Fig. 3 unterscheidet sich von derjenigen der Fig. 4 dadurch, daß die Aussparung 9 einmal als abgerundete Form (Nase 14) - Fig. 3 - und das andere Mal als rechteckige Form 15 - Fig. 4 - ausgebildet ist.

Ein derartiger Nasen- oder Nasenminutenring kann bei Kolben für Verbrennungsmotoren oder Kompressoren einerseits in der Kolbenringnut eins und/oder in der Kolbenringnut zwei eingesetzt werden. Hierbei hat sich gezeigt, daß je nach Einsatzort einerseits der Ölverbrauch und andererseits der Leckgasdurchlaß (Blowby) gegenüber konventiellen Ausführungen deutlich reduziert werden konnte, sodaß festzustellen ist, daß mit einem derartigen Kolbenring auf konstruktiv und herstellungsmäßig einfache Weise ein Kolbenring für den Kolben eines Verbrennungsmotors oder Kompressors geschaffen wird, mit dem hervorragende Ergebnisse bezüglich Leckgasdurchlaß und Ölverbrauch bei ausreichenden Schmierverhältnissen erreicht werden.

## Patentansprüche

1. Geschlitzter Kolbenring (1) für Kolben für Verbrennungsmotoren oder Kompressoren mit einer außen (3), im montierten Zustand auf der dem Verbrennungsraum abgekehrten Seite bis nahe an den Schlitz (2) reichenden umlaufenden Aussparung (9),
**dadurch gekennzeichnet,**
**daß** die Aussparung (9) von einem Bereich (10) diametral gegenüber des Schlitzes (2) mit maximaler Höhe (12) bis zum Schlitz (2) bzw. nahe des Schlitzes (2) allmählich bis auf Null (13) abnehmender Höhe ausgebildet ist.

2. Geschlitzter Kolbenring nach Anspruch 1,
**dadurch gekennzeichnet,**
**daß** die Aussparung (9) eine rechteckige Form (15) aufweist.

3. Geschlitzter Kolbenring nach Anspruch 1,
**dadurch gekennzeichnet,**
**daß** die Aussparung (9) eine abgerundete Form (14) aufweist.

4. Geschlitzter Kolbenring nach einem der vorhergehenden Ansprüche,
**dadurch gekennzeichnet,**
**daß** die Aussparung (9) durch einen Drehvorgang mechanisch einbringbar ist.

## Claims

1. A slit piston ring (1) for pistons for internal combustion engines or compressors having an outer (3), circumferential recess (9), which in the mounted state on the side further from the combustion chamber extends close to the slit (12),
**characterised in that** the recess (9) is constructed so that its height gradually decreases to zero (13) from a region (10) diametrically opposite the slit (2) with maximum height (2) or close to the slit (2).

2. A slit piston ring according to Claim 1,
**characterised in that** the recess (9) has a rectangular shape (15).

3. A slit piston ring according to one of the preceding Claims,
**characterised in that** the recess (9) has a rounded shape (14).

4. A slit piston ring according to one of the preceding Claims,
**characterised in that** the recess (9) can be mechanically produced by a turning operation.

## Revendications

1. Segment de piston fendu (1) pour pistons de moteurs à combustion interne ou de compresseurs présentant un évidement périphérique (9) s'étendant extérieurement (3) à l'état monté sur le côté opposé à la chambre de combustion jusqu'au voisinage de la fente (2),**caractérisé en ce que** l'évidement (9) est réalisé depuis une zone (10), diamétralement opposée à la fente (2) avec une hauteur maximale (12), jusqu'à la fente (2) ou au voisinage de la fente (2) avec une hauteur diminuant graduellement jusqu'à zéro (13).

2. Segment de piston fendu suivant la revendication 1, **caractérisé en ce que** l'évidement (9) présente une forme rectangulaire (15).

3. Segment de piston fendu suivant la revendication 1, **caractérisé en ce que** l'évidement (9) présente une forme arrondie (14).

4. Segment de piston fendu suivant l'une des revendications précédentes, **caractérisé en ce que** l'évidement (9) est réalisable mécaniquement par une opération de tournage.
